# EUROPÄISCHE PATENTSCHRIFT

(11) **EP 1 969 755 B1**
(45) Veröffentlichungstag und Bekanntmachung des Hinweises auf die Patenterteilung: **16.02.2011**
(21) Anmeldenummer: 06830413.8
(22) Anmeldetag: 06.12.2006
(51) Int. Cl.: H04L 1/00

(54) **VERFAHREN ZUM ANPASSEN EINES KOMMUNIKATIONSNETZWERKES DER PROZESSAUTOMATISIERUNGSTECHNIK AN DIE QUALITÄT DER KOMMUNIKATIONSVERBINDUNG ZWISCHEN EINEM SENDER UND EINEM EMPFÄNGER**
METHOD FOR ADAPTING A COMMUNICATION NETWORK USED IN PROCESS AUTOMATION TECHNOLOGY TO THE QUALITY OF THE COMMUNICATION LINK BETWEEN A TRANSMITTER AND A RECEIVER
PROCEDE POUR L'ADAPTATION D'UN RESEAU DE COMMUNICATION DE LA TECHNIQUE D'AUTOMATISATION DE PROCESSUS A LA QUALITÉ DE LA CONNEXION DE COMMUNICATION ENTRE UN EMETTEUR ET UN RECEPTEUR

(30) Priorität: 29.12.2005 DE 102005063055
(43) Veröffentlichungstag der Anmeldung: 17.09.2008
(73) Patentinhaber: Endress + Hauser Process Solutions AG, 4153 Reinach (CH)
(72) Erfinder: HÄHNICHE, Jörg, 79183 Bad Krozingen (DE); ICHTERTZ, Francois, F-68532 De Goulle, Habsheim (FR)
(74) Vertreter: Andres, Angelika Maria
(86) Internationale Anmeldenummer: PCT/EP2006/069368
(87) Internationale Veröffentlichungsnummer: WO 2007/077086

(56) Entgegenhaltungen:
- EP-A1- 1 193 903
- EP-A2- 0 831 616
- US-A1- 2004 088 611
- US-A1- 2004 230 323

## Beschreibung

Die Erfindung betrifft ein Verfahren zum Anpassen eines Kommunikationsnetzwerkes der Prozessautomatisierungstechnik an die Qualität der Kommunikationsverbindung zwischen einem Sender und einem Empfänger gemäß dem Oberbegriff des Anspruchs 1.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, die z. B. als Ventile den Durchfluss einer Flüssigkeit in einem Rohrleitungsabschnitt oder als Pumpen den Füllstand in einem Behälter beeinflussen.

Eine Vielzahl solcher Feldgeräte wird von der Fa. Endress + Hauser hergestellt und vertrieben.

In der Regel sind Feldgeräte in modernen Fabrikationsanlagen über Kommunikationsnetzwerke (Profibus, Foundation Fieldbus etc.) mit übergeordneten Einheiten (z. B. Leitsysteme, Steuereinheiten) verbunden. Diese übergeordneten Einheiten dienen zur Prozesssteuerung, Prozessvisualisierung, Prozessüberwachung sowie zur Inbetriebnahme und zum Bedienen der Feldgeräte.

Als Feldgeräte werden allgemein auch solche Einheiten bezeichnet, die direkt an einen Feldbus angeschlossen sind und zur Kommunikation mit den übergeordneten Einheiten dienen (z. B. Remote I/Os, Gateways, Linking Devices).

Zum Teil sind Feldbussysteme in Unternehmensnetzwerke, die auf Ethernet-Basis arbeiten, integriert. Damit kann aus unterschiedlichen Bereichen eines Unternehmens auf Prozess- bzw. Feldgerätedaten zugegriffen werden.

Zur weltweiten Kommunikation können die Firmennetzwerke auch mit öffentlichen Netzwerken, z. B. dem Internet verbunden sein.

Zum Bedienen der Feldgeräte sind entsprechende Bedienprogramme notwendig (z. B. FieldCare, Endress+Hauser; Pactware; AMS, Emerson; Simatic PDM, Siemens). Zur Anlagensteuerung und -überwachung dienen Leitsystem-Anwendungen (z. B. Simatic PCS7, Siemens; ABB Symphony, Delta V; Emerson).

Bei dem Feldbus "Foundation Fieldbus" steuert ein Link-Active-Sheduler LAS den zeitlichen Ablauf der Kommunikation über den Feldbus. Der LAS kontrolliert die Busaktivitäten mit Hilfe von verschiedenen Kommandos, welche er an die einzelnen Busteilnehmer sendet. Geräte die die Funktion des LAS ausführen können, bezeichnet man als Link-Master.

Prinzipiell unterscheidet man bei Foundation Fieldbus zwischen der zyklischen und der azyklischen Kommunikation. Zeitkritische Aufgaben wie z. B. die Regelung der Prozessgrößen (Control-Funktionen) werden ausschließlich über die zyklische Kommunikation abgewickelt. Die Parametrierung und Diagnose von Feldgeräten erfolgt über die azyklische Kommunikation. Um alle Kommunikationsaufgaben zum richtigen Zeitpunkt und ohne Zugriffskonflikte durchführen zu können, wird die zyklische Kommunikation nach einem festen Bearbeitungszeitplan, der sich zyklisch wiederholt, durchgeführt. Einen Zyklus des Bearbeitungszeitplans nennt man auch Makrozyklus.

Die Kommunikation der Teilnehmer des Foundation Fieldbus erfolgt nach dem Publisher-Subscriber-Prinzip.

Wie bereits erwähnt, liegt für jedes Gerät (Busteilnehmer) der Zeitpunkt fest, an dem das Gerät zum Senden seiner zyklischen Daten aufgefordert wird. Das angesprochene Gerät (der Publisher) veröffentlicht daraufhin seine Daten über den Feldbus. Diese Daten werden dann von allen Geräten, die als Subscriber für diese Daten konfiguriert worden sind, gelesen.

Zwischen dem Publisher und dem oder dem Subscribern besteht während der Datenübertragung eine direkte Kommunikationsverbindung.

In jedem Gerät ist ein Parameter Stalecount-Limit als Güteparameter für die Verbindungen gespeichert. Dieser Parameter wird heute bei der Konfigurierung des Feldbussystems vorgegeben und ist dadurch nach der Inbetriebnahme des Feldbussystems fixiert. Der Parameter Stalecount Limit dient zur Bestimmung, wann ein Subscriber eine Kommunikationsverbindung zu einem Publisher als schlecht betrachtet. Dabei wird geprüft, ob die Daten im Eingangspufferspeicher (buffer) eines Subscribers sich während des letzten Makrozyklus geändert haben. Ist dies nicht der Fall, so wurden keine neuen Daten übertragen oder es fand keine Datenübertragung aufgrund einer Störung statt.

Der Subscriber sieht somit keine aktuellen Daten sondern Werte die mehr oder weniger alt sind. Daher kommt auch die englische Bezeichnung "stale" für diese Daten. Sie gelten als abgestanden oder schal, d. h. sie sind veraltet.
Wenn Control-Funktionen mit alten (schalen) Werten ausgeführt werden, bedeutet dies, dass die Reaktionszeit der gesamten Anlage auf Veränderungen verlangsamt ist und vor allem dass auch sicherheitskritische Anwendungen verzögert reagieren.
Während der Lebenszeit eines Feldbussystems kann sich die Qualität der Kommunikationsverbindung zwischen zwei Geräten aufgrund von Alterungserscheinungen, z. B. an der Verkabelung, verschlechtern.
Bei einem fest vorgegebenen Wert für den Parameter Stalecount Limit wird dieser Wert noch einer gewissen Lebenszeit der Anlage aufgrund von Alterungserscheinungen eher überschritten als bei der Inbetriebnahme. Wird innerhalb mehrerer aufeinanderfolgenden Makrozyklen (Anzahl = Stalecount Limit) der Eingangswert im Eingangspufferspeicher nicht geändert, so wird der Status des Eingangswerts auf schlecht ("bad") gesetzt. Dies kann unter Umständen zu einem Anlagenstillstand führen.
Bei der Konfiguration des Feldbussystems legt ein Fachmann den Parameter Stalecount Limit in Abhängigkeit seiner Erfahrung fest; typische Werte 4-16. Gewissermaßen wird dadurch die Robustheit eines Feldbussystems auf Störeinflüsse festgelegt.
Selbstverständlich kann der Parameter Stalecount Limit nicht beliebig groß angesetzt werden, weil dann die Sicherheit der Anlage nicht mehr gewährleistet werden kann, da in diesem Fall nicht mehr sichergestellt ist, dass wichtige Daten für Control-Funktionen zwischen den Feldgeräten rechtzeitig ausgetauscht werden. Die Reaktionsfähigkeit der Anlage auf Änderungen wird dadurch verlangsamt.
In der US 2004/0230323 A1 werden eine Vorrichtung, ein System und ein Verfahren beschrieben, bei denen sicherheitsrelevante Daten über ein offenes System von einem Sender zu einem Empfänger übertragen werden.
Sog. Sequence Numbers werden verwendet, um die Reihenfolge von Nachrichten, die zwischen einem Sender und einem Empfänger übermittelt werden, zu identifizieren. Sind diese Sequence Numbers während einer vorgegebenen Anzahl von Zeitintervallen inkorrekt, wird der Status der Verbindung zwischen dem Sender und dem Empfänger als schlecht bewertet.
Aufgabe der Erfindung ist es deshalb, ein Feldbussystem zu schaffen, das zum einen ein notweniges Maß an Robustheit bezüglich der Control-Funktionen besitzt und gleichzeitig auch ein ausreichendes Maß an Sicherheit für die Anlage gewährleistet.
Gelöst wird diese Aufgabe durch die im Anspruch 1 angegebenen Merkmale.
Vorteilhafte Weiterentwicklungen der Erfindung sind in den Unteransprüchen angegeben.
Die wesentliche Idee der Erfindung besteht darin, dass die Entwicklung eines Güteparameters für eine Kommunikationsverbindung zeitlich erfasst wird und aufgrund der Auswertung dieser zeitlichen Entwicklung eine Anpassung des Grenzwertes des Güteparameters erfolgt. Der Parameter Stalecount Limit stellt z. B. einen solchen Güteparameter dar.
Dadurch wird gewährleistet, dass das Feldbussystem eine ausreichende Robustheit aufweist, gleichzeitig aber die Sicherheit der Anlage nicht unnötigerweise beeinträchtigt wird.

Nachfolgend ist die Erfindung anhand eines in der Zeichnung dargestellten Ausführungsbeispiels näher erläutert.

Es zeigt:

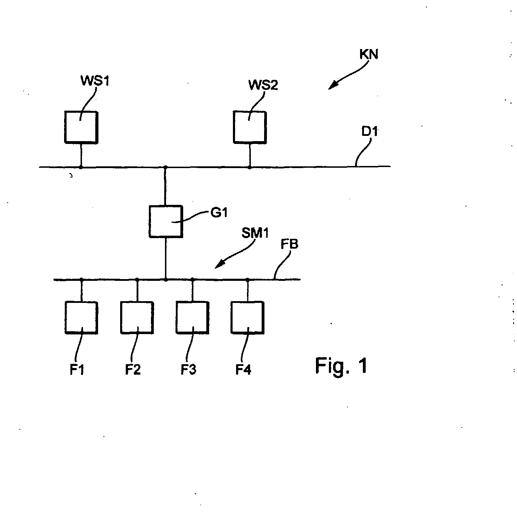

Fig. 1 Feldbussystem.

In Fig. 1 ist ein Netzwerk der Automatisierungstechnik näher dargestellt. An einem Datenbus D1 sind mehrere Rechnereinheiten, (Arbeitsplatzrechner, Workstations) WS1, WS2, angeschlossen. Diese Rechnereinheiten dienen als übergeordnete Einheiten (Leitsystem bzw. Steuereinheit) unter anderem zur Prozessvisualisierung, Prozessüberwachung und zum Engineering wie zum Bedienen und Überwachen von Feldgeräten. Der Datenbus D1 arbeitet z. B. nach dem HSE (High Speed Ethernet)-Standard der Foundation Fieldbus. Über ein Gateway G1, das auch als Linking-Device oder Field Controller bezeichnet wird, ist der Datenbus D1 mit einem Feldbus-Segment SM 1 verbunden. Das Feldbus-Segment SM 1 besteht aus mehreren Feldgeräten F1, F2, F3, F4, die über einen Feldbus FB miteinander verbunden sind. Bei den Feldgeräten F1, F2, F3, F4 kann es sich sowohl um Sensoren oder um Aktoren handeln. Der Feldbus FB arbeitet entsprechend nach dem Feldbusstandard Foundation Fieldbus.

Die Erfindung wird anhand der Kommunikationsverbindung zwischen dem Feldgerät F1 und F2 näher erläutert werden. Das Feldgerät F2 dient als Publisher (Sender), das Feldgerät F1 als Subscriber (Empfänger) Eine Kommunikationsverbindung zwischen diesen beiden Geräten kommt einmal pro Makrozyklus zustande. Gesteuert wird die Kommunikation aller Teilnehmer des Kommunikationsnetzwerkes von einem Link-Active-Sceduler LAS, der z. B. Gateway G1 vorgesehen ist. Die Kommunikation im Hinblick auf Control-Funktionen des Feldbussystems erfolgt zyklisch, d. h. sie wiederholt sich nach jedem Makrozyklus.

Im Feldgerät F1 ist ein Grenzwert für einen Güteparameter, der gemäß den Foundation Fieldbus Spezifikationen als "Stalecount Limit" bezeichnet wird, vorgegeben. Dieser Grenzwert definiert, wie oft hintereinander eine Kommunikationsverbindung noch als gut bewertet wird, bevor die Änderung auf "bad" (schlecht) erfolgt. Der Parameter Stalecount wird jeweils um eins erhöht, wenn ein Kommunikationsfehler vorliegt.

Ein Kommunikationsfehler liegt dann vor, wenn der Eingangswert im Eingangspufferspeicher des Feldgeräts F1 während eines Makrozyklus nicht aktualisiert wurde. D. h. das Feldgerät F1 arbeitet nicht mit dem aktuellsten Wert sondern mit einem veralteten Wert, der um mindestens eine Makrozykluszeit zurückliegt.

Wenn der Parameter Stalecount den Grenzwert Stalecount Limit erreicht kann dies zum Anlagenstillstand führen.

Die Parameter Stalecount Limit werden z. B. bei der Inbetriebnahme der Anlage in den einzelnen Feldgeräten auf 4 gesetzt. Dies bedeutet eine maximale Reaktionszeit MR auf eine ungünstige Prozessbedingung von MR= typische Reaktionszeit + (Stalecount Limit - 1) * Makrozykluszeit. Je geringer der Wert des Parameters Stalecount Limit gesetzt wird, desto schneller ist das System in der Lage zu reagieren.

Normalerweise ist die Verkabelung des Feldbussystems bei der Inbetriebnahme völlig in Ordnung. Anfänglich wird der Parameter Stalecount mit großer Wahrscheinlichkeit zwischen 0 und 1 variieren.

Im Laufe der Zeit, d. h. über einen Zeitraum von Monaten oder Jahren, kann die Qualität der Verkabelung aber aufgrund verschiedener Alterungsprozessen nachlassen.

D. h. die Kommunikationsverbindung wird schlechter, Störeinflüsse durch EMV-Einstrahlung nehmen zu. Dies bedeutet aber, dass die Wahrscheinlichkeit dass Daten im Eingangspufferspeicher des Feldgeräts F1 nicht bei jedem Makrozyklus aktualisiert werden, zunimmt.

Der Parameter Stalcount kann schon einmal den Wert 3 erreichen. Da die zeitliche Entwicklung des Parameters Stalecount im Feldgerät F1 aufgenommen wird, kann abgesehen werden, wenn der Parameter Stalecount vorraussichtlich den Grenzwert Stalecount Limit erreichen wird. Hierfür können entsprechende Auswerteprogramme bzw. Expertensysteme eingesetzt werden. Dadurch dass die Entwicklung des Parameters erfasst wird, kann mit Hilfe einer solchen Anpassung der Grenzwert erhöht und z. B. auf 5 oder 6 gesetzt werden.

Die maximal zulässige Reaktionszeit MR erhöht sich dadurch etwas, d. h. die Robustheit des Systems wird erhöht, gleichzeit kann aber die Anlagensicherheit noch gewährleistet werden.

Damit werden unnötige Anlagenstillstände vermieden und gleichzeitig wird die Reaktionszeit der Anlage auf kritische Zustände nicht unnötig lange verzögert.

Der Parameter Stalecount Limit wird im Laufe der Lebenszeit einer Anlage dynamisch an die Anlagenbedingungen angepasst.

Durch die statistische Auswertung der Stalecount-Werte kann auf verschiedene Störeinflüsse (z. B. EMV-Einstrahlungen) geschlossen werden.

Hierdurch können auch Massnahmen getroffen werden um diese Störeinflüsse zu verringern.

Um die Anlagensicherheit nicht zu gefährden wird jede Änderung des Parameters Stale Count Limit an eine übergeordnete Einheit z. B. an die Warte gemeldet. Gegebenenfalls kann auch ein Maximalwert vorgegeben werden, der nicht automatisch überschritten werden darf, ohne dass eine expizite Bestätigung einer verantwortlichen Person erfolgt.

Als Ausführungsbeispiel wurde ein kabelgebundenes Netzwerk der Automatisierungstechnik beschrieben. Die Erfindung eignet sich auch für kabellose Netzwerke so genannte "wireless networks", die funkbasiert arbeiten.

## Patentansprüche

1. Verfahren zum Anpassen eines Kommunikationsnetzwerkes an die Qualität der Kommunikationsverbindung zwischen einem als Sender bzw. Publisher dienenden ersten Feldgerät und einem als Empfänger bzw. Subscriber dienenden zweiten Feldgerät, wobei das Kommunikationsnetzwerk in einer Anlage der Prozessautomatisierungstechnik eingesetzt ist, wobei mehrere Feldgeräte (F1, F2, F3, F4) über einen Feldbus (FB) miteinander verbunden sind, wobei die Kommunikationsverbindung und somit die Datenübertragung zwischen dem Empfänger und dem Sender zyklisch einmal während eines Makrozyklus zustande kommt, wobei ein Kommunikationsfehler dann vorliegt, wenn der Eingangswert im Eingangspufferspeicher des Empfängers während eines Makrozyklus nicht aktualisiert wird, wobei im Empfänger ein Grenzwert Stalecount Limit für einen Güteparameter Stalecount vorgegeben wird, wobei der Güteparameter Stalecount jeweils um eins erhöht wird, wenn der Kommunikationsfehler vorliegt, wobei der Grenzwert Stalecount Limit definiert, wie viele Male hintereinander die Kommunikationsverbindung noch als gut bewertet wird, bevor die Änderung auf schlecht erfolgt, wobei das Verfahren folgende Verfahrensschritte aufweist, die eine dynamische Anpassung des Grenzwertes Stalecount Limit des Güteparameters Stalecount an die sich ändernden Bedingungen in der Anlage ermöglichen:
A. Erfassen der zeitlichen Entwicklung des Güteparameters Stalecount;
B. Auswerten der zeitlichen Entwicklung des Güteparameters Stalecount;
C. Erhöhung des vorgegebenen Grenzwertes Stalecount Limit für den Güteparameter Stalecount in Abhängigkeit von der zeitlichen Entwicklung des Güteparameters Stalecount unter Zuhilfenahme von entsprechenden Auswerteprogrammen oder Expertensystemen.

2. Verfahren nach Anspruch 1, wobei jede Änderung des Grenzwertes Stalecount Limit für den Güteparameter Stalecount an eine übergeordnete Einheit (WS1, WS2) gemeldet wird.

3. Verfahren nach Anspruch 1, wobei die zeitliche Entwicklung des Güteparameters Stalecount im Feldgerät aufgenommen wird, und wobei mit Hilfe eines entsprechenden Auswerteprogramms bzw. eines Expertensystems ermittelt wird, wann der Güteparameter Stalecount voraussichtlich den vorgegebenen Grenzwert Stalecount Limit des Güteparameters Stalecount erreichen wird.

4. Verfahren nach Anspruch 1 oder 3, wobei ein Maximalwert für den Grenzwert Stalecount Limit des Güteparameters Stalecount vorgegeben wird, der nicht automatisch überschritten werden darf, ohne dass eine explizite Bestätigung einer verantwortlichen Person erfolgt.

## Claims

1. Method to adapt a communication network to the quality of the communication connection between a first field device acting as a sender or publisher, and a second field device acting as a receiver or subscriber, where the communication network is used in a process automation technology system, where several field devices (F1, F2, F3, F4) are interconnected via a fieldbus (FB), where the communication connection and thus the data transmission between the receiver and sender takes place once cyclically during a macro cycle, where a communication error is present if the input value in the input buffer memory of the receiver is not updated during a macrocycle, where a stale count limit for a stale count quality parameter is predefined in the receiver, where the stale count quality parameter is increased by one if the communication error takes place, where the stale count limit defines how many times in succession the communication connection is regarded as good before the change to bad, where the method comprises the following steps that allow a dynamic adjustment of the stale count limit of the stale count quality parameter to the changing conditions in the system:
A. Recording the development of the stale count quality parameter over time.
B. Evaluating the development of the stale count quality parameter over time.
C. Increasing the predefined stale count limit for the stale count quality parameter depending on the development over time of the stale count quality parameter with the aid of appropriate evaluation programs or expert systems.

2. Method as per Claim 1, where every change in the stale count limit for the stale count quality parameter is reported to a higher-order unit (WS1, WS2).

3. Method as per Claim 1, where the development over time of the stale count quality parameter is recorded in the field device, and where, with the help of an appropriate evaluation program or an expert system, the system determines when the stale count quality parameter is expected to reach the prespecified stale count limit of the stale count quality parameter.

4. Method as per Claim 1 or 3, where a maximum value for the stale count limit of the stale count quality parameter is predefined and this value cannot be exceeded without being explicitly confirmed by a person in charge.

## Revendications

1. Procédé destiné à l'adaptation d'un réseau de communication à la qualité de la liaison de communication entre un premier appareil de terrain servant d'émetteur ou de diffuseur, et un deuxième appareil de terrain servant de récepteur ou de souscripteur, le réseau de communication étant mis en oeuvre dans une installation de la technique d'automatisation des process, où plusieurs appareils de terrain (F1, F2, F3, F4) sont interconnectés par l'intermédiaire d'un bus de terrain (FB), la liaison de communication et ainsi la transmission de données entre le récepteur et l'émetteur étant réalisée, de façon cyclique, pendant un cycle macro, une erreur de communication étant présente lorsque la valeur d'entrée dans la mémoire tampon d'entrée du récepteur n'est pas actualisée pendant un cycle macro, une valeur seuil "Stalecount Limit" étant prédéfinie dans le récepteur pour un paramètre qualité "Stalecount", le paramètre qualité "Stalecount" étant incrémenté à chaque fois que l'erreur de communication est présente, la valeur seuil "Stalecount Limit" définissant le nombre de fois successives où la liaison de communication est encore jugée bonne, avant que n'intervienne la modification en liaison mauvaise, le procédé comportant les étapes de procédé suivantes, qui permettent une adaptation dynamique de la valeur seuil "Stalecount Limit" du paramètre qualité "Stalecount" par rapport aux conditions changeantes au sein de l'installation.
A. Saisie du développement temporel du paramètre qualité "Stalecount" ;
B. Évaluation du développement temporel du paramètre qualité "Stalecount" ;
C. Augmentation de la valeur seuil "Stalecount Limit" prédéfinie pour le paramètre qualité "Stalecount" en fonction du développement temporel du paramètre qualité "Stalecount" à l'aide de programmes d'évaluation ou de systèmes experts appropriés.

2. Procédé selon la revendication 1, pour lequel chaque modification de la valeur seuil "Stalecount Limit" pour le paramètre qualité "Stalecount" est signalée à une unité maître (WS1, WS2).

3. Procédé selon la revendication 1, pour lequel le développement temporel du paramètre qualité "Stalecount" est enregistré dans l'appareil de terrain, et pour lequel, à l'aide d'un programme d'évaluation ou d'un système expert approprié est déterminé l'instant auquel le paramètre qualité "Stalecount" atteindra vraisemblablement la valeur seuil "Stalecount Limit" prédéfinie du paramètre qualité "Stalecount".

4. Procédé selon la revendication 1 ou 3, pour lequel est prédéfinie pour la valeur seuil "Stalecount Limit" du paramètre qualité "Stalecount", une valeur maximale, qui ne doit pas être dépassée automatiquement sans l'existence d'une confirmation explicite d'une personne responsable.
